# EUROPEAN PATENT APPLICATION

(11) **EP 2 022 333 A1**
(43) Date of publication of application: **11.02.2009**
(21) Application number: 08161931.4
(22) Date of filing: 06.08.2008
(51) Int. Cl.: A21B 1/48, A21B 2/00

(54) **Tunnel oven for foodstuffs, particularly baked products, such as pizzas, focaccia bread and the like**

(30) Priority: 08.08.2007 IT BO20070579
(71) Applicant: Pignata Michele, 31048 San Biagio di Callalta (IT)
(72) Inventor: Pignata Michele, 31048 San Biagio di Callalta (IT)
(74) Representative: Porsia, Dino

(57) **Abstract**

Tunnel oven (1) for food products (P) comprising a cooking zone (201) provided with an entrance mouth (2) and an exit mouth (3), a conveyor belt (300) for transporting food products (P) entering and exiting the said cooking zone (201) in a predetermined direction (F), heating means (400) placed above and below the food products (P) to cook, characterized in that the said heating means (400) comprise incandescent high-temperature lamps (404), provided with quartz casings, typically tubular lamps which emit radiations especially in the infrared frequency to rapidly heat and permit the rapid cooking of the food product (P) and which have reduced thermal inertia.

## Description

This invention relates to a tunnel oven for foodstuffs, particularly baked products such as pizzas, focaccia bread and the like. Among fast food products, the pizza is obtaining increasing success thanks to its excellent organoleptic and nutritional characteristics. The artisan preparation of pizza, as is the case in pizzerias, envisages a series of relatively complex operations which require the work of expert persons such as specialized pizza chefs, for example. The food industry has attempted to overcome this problem by preparing food products such as pizzas and other similar products in a way corresponding to the operations carried out by an expert person, then subjecting them to precooking and finally freezing them. These frozen food products have shown themselves to be particularly suitable for the fast catering sector as they do not require the presence of expert personnel, as it is only necessary to heat the product and finish cooking it, with preset and repeatable time and temperature parameters. Nevertheless, especially in the fast food sector, it is necessary in the case of the aforesaid frozen food products to cook many products very quickly to meet all the clientele's requests. Furthermore, another problem resulting from the use of these frozen products is how to obtain precise and repeatable cooking of the same. As a result, special ovens have been proposed for the completion and preparation of the aforesaid food products and for pizzas in particular. Patent US 5 686 004 describes a portable tunnel oven to which a conveyor belt can be fitted for conveying the food product to cook. The conveyor belt is separated from the oven to facilitate transport. Patent US-6 157 002 illustrates another tunnel oven provided with a conveyor belt. The oven comprises a heated tunnel with heating panels based on electrical elements at the top and bottom inserted in special slots, the heating elements have a folded shape. One problem with tunnel ovens of known types results from their high electricity consumption because of heat dispersion and also because of the low efficiency of the heating elements made with electrical resistances of the armoured or similar type. Specifically because of the electrical heat sources used, the performance of current electric ovens is low in the passage from a rest condition to a working condition and also from a standby condition to a working condition. Attempts have been made to produce ovens with infrared ray heating sources, for example as described in patents CH 571309, US 6.229.117, US 7231.871, but with little success, essentially because of the use of heating elements at the top only. The object of this invention is therefore to provide a tunnel oven of a perfected type, for food products, which avoids heat dispersion and which is fitted with heating elements which, therefore, make it possible to obtain a greater level of efficiency when cooking and transferring the heat to the top and to the bottom of the food products and which have low electricity consumption and great flexibility of use. These objects are achieved by this invention by means of a tunnel oven for food products as in the attached claim 1) and subsequent dependent claims which comprises: a cooking zone provided with an entrance mouth and an exit mouth; a conveyor belt for transporting the food products entering and exiting the said cooking zone; heating means placed above and below the food products to cook and characterized in that these heating means comprise tubular infrared ray lamps. Other objects and advantages of the present invention will be made clearer by the following detailed description of some preferred embodiments of the same, provided with reference to the attached tables of drawings, in which:
- Figure 1 is a front view of the tunnel oven in perspective;
- Figure 2 is a longitudinal section view of the tunnel oven as in figure 1;
- Figure 3 is a cross section view of one of the oven's heating sources;
- Figure 4 is a cross section view of the tunnel oven, seen in correspondence with the bottom and top heating means;
- Figure 5 is a view of an internal frame of the tunnel oven in perspective;
- Figure 6 is a rear view of the tunnel oven in perspective, with some side parts cut away to show the internal components more clearly;
- Figure 7 and 8 are section views of some diffusers of the tunnel oven, also visible in the previous figure 6.

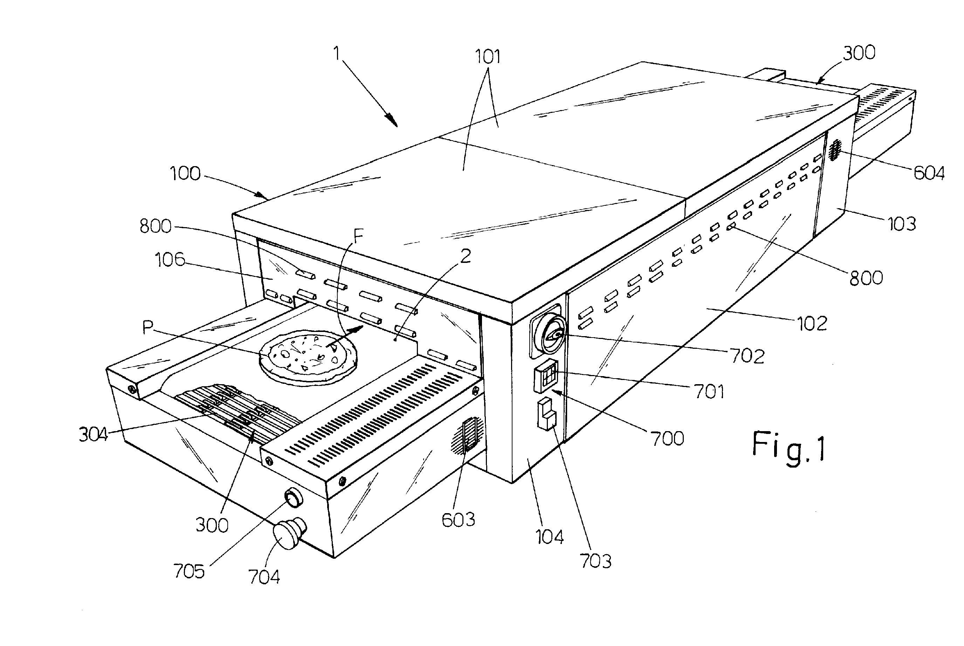

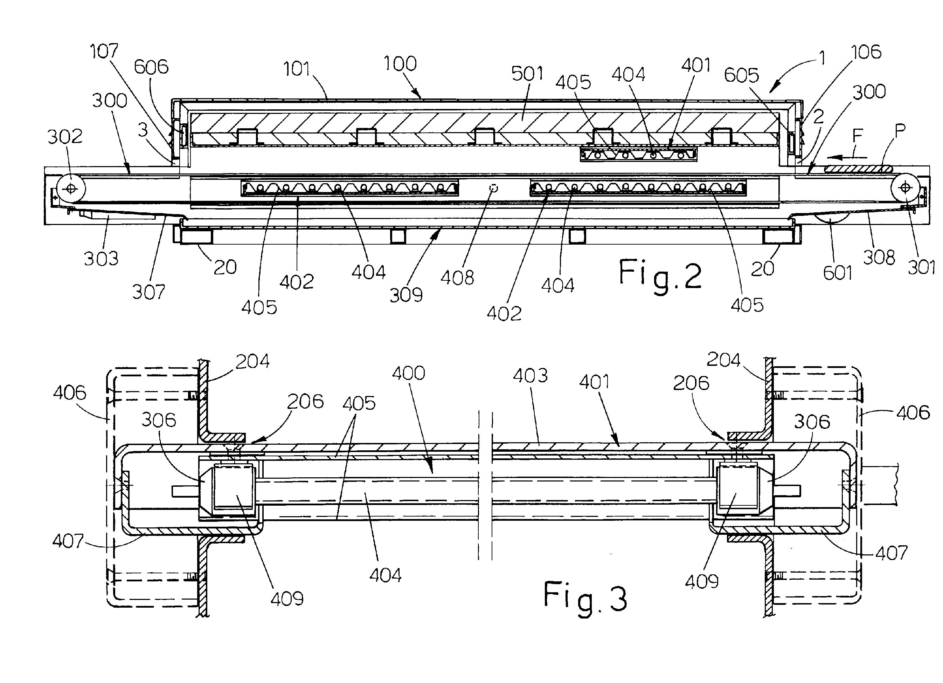

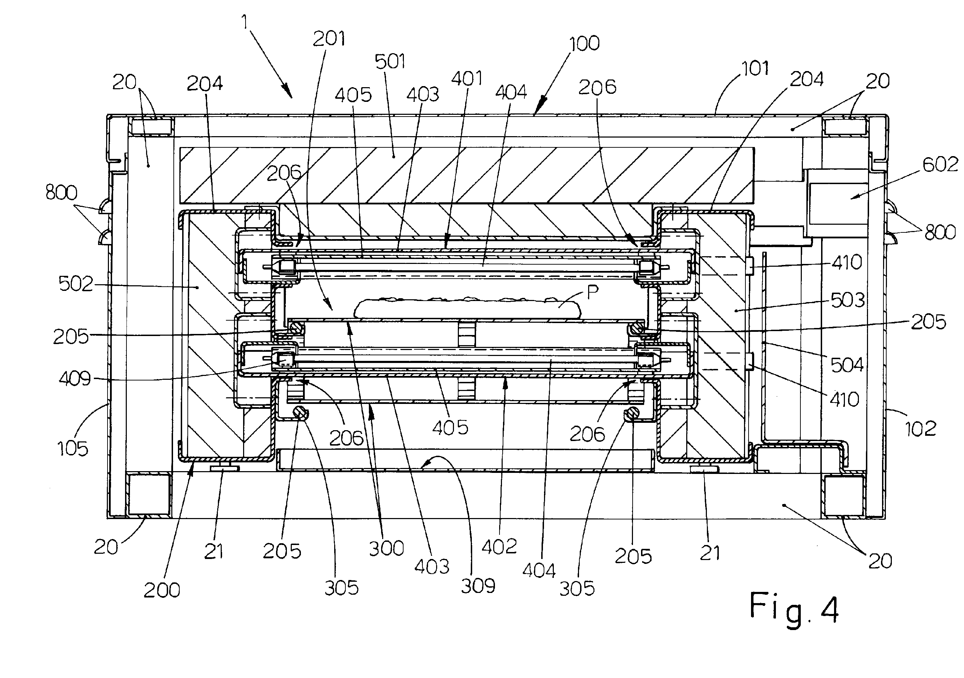

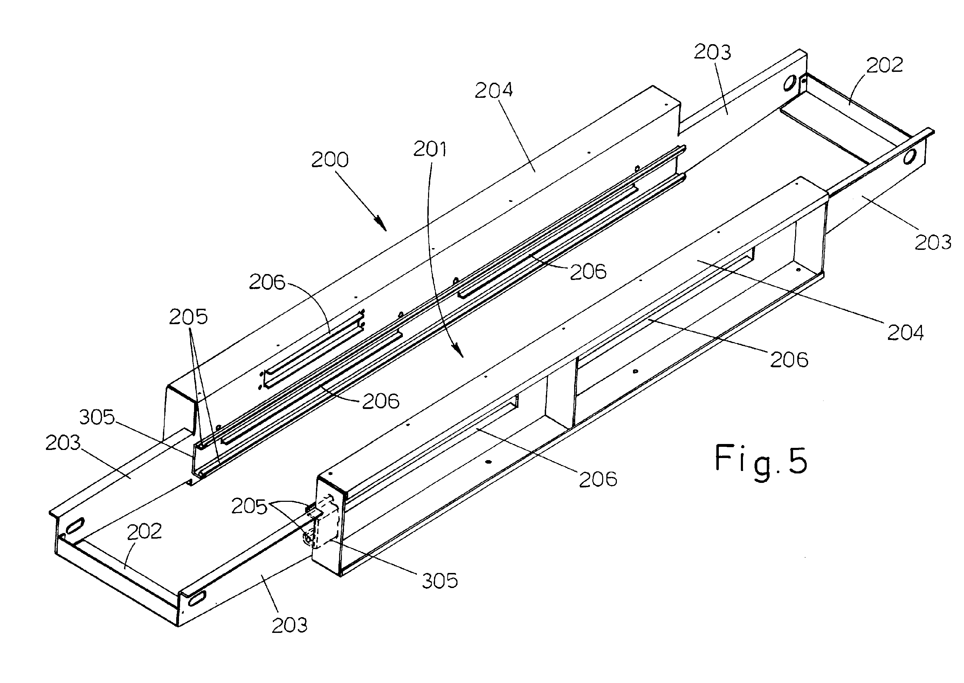

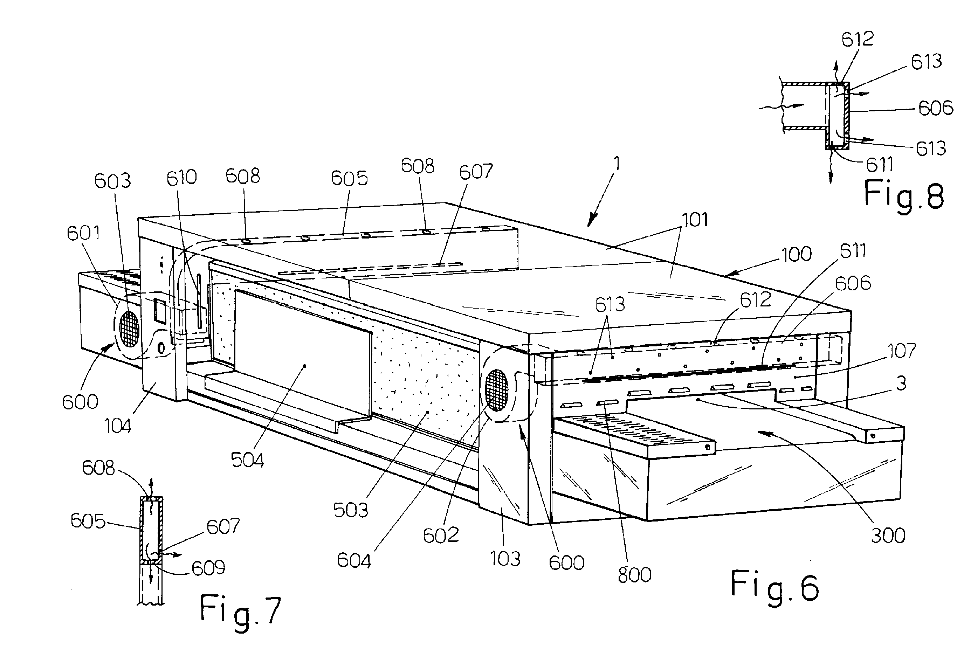

In figures 1 and 6, 1 indicates a tunnel oven for foodstuffs comprising an entrance mouth 2 for a food product P, an exit mouth 3 and a casing 100 consisting of external refractory stainless steel cover panels 101-107. It can be seen from figure 4 that the oven 1 comprises a support frame 20 consisting of tubular steel sections which rests on the ground on feet that are not shown or on an appropriate specially made structure. Fixed externally on the frame 20 are the aforesaid panels 101-107 while the sides of a box structure 200 are placed on the bottom crosspieces of this frame, by means of inserts 21 made of any heat insulation material - ceramic, PIREX® or TEFLON ® for example - the said box structure comprising in turn an intermediate zone 201 for cooking the said food product P. A conveyor belt 300 which feeds the food product P in a direction F is envisaged for supporting the product itself (figs 1, 2 and 4) and is realized in a reticular form to permit the passage of infrared radiation for cooking the bottom part of the said food product P. The box structure 200, illustrated in detail in figure 5, is substantially symmetrical vis-à-vis a median vertical plane and comprises pairs of terminal arms 203, interconnected by crosspieces 202, which support the drive shafts of the ends of the conveyor belt 300 closed in a loop and comprises two central side panels 204 provided with several substantially rectangular slot-type apertures 206 in which boxes with heating means will be inserted (see below). Again in figure 5 and also with reference to the detail in figure 4, it can be noted that in the vicinity of the cooking zone 201 the internal walls of the central side panels 204 of the box structure 200 are fitted with longitudinal section bars 305 on the edges of which continuous guides 205 are fixed, for the support and movement of the two forward and return branches of the conveyor belt 300. It can be seen from figure 2 that the conveyor belt 300 is of the closed loop type and is supported at the ends by two toothed comb rollers 301 and 302 sustained in turn in a rotating manner by the said arms 203. Overall, the conveyor belt 300, though being able to bend on the said end rollers, is sufficiently rigid transversally to support a continuous series of food products P over its available length. The roller 301 is idle, is for guidance only and is connected to known adjusters for the longitudinal tensioning of the belt, while the roller 302 is connected to a gearmotor 303, illustrated in part in figure 2, for the motorization and feed of the belt itself at variable speed. The conveyor belt 300 comprises a bendable reticular link structure 304, resistant to heat, preferably made of stainless steel. As has already been said, the links 304 are realized with an open structure that allows infrared radiation to pass, in such a way as to permit heating and cooking of the bottom of the food product P too, by suitable heating means (see below). It can be seen from figure 2 that on the bottom of the oven, in the zone of the entrance mouth 2 and of the exit mouth 3, below the conveyor belt 300, are chutes 307, 308 for conveying cooking residues of the food products P towards an intermediate collection box 309, also placed underneath and in the central position of the conveyor and resting on the crosspieces of the frame 20. This box 309 can be pulled out periodically, for example, with a longitudinal movement for emptying and cleaning. Heating means 400 arranged above and below the food products P are envisaged for cooking the products themselves on the top branch of the conveyor 300. With particular reference to figures 2-4, the heating means comprise a top heating box 401 and two bottom heating boxes 402, suitable for being inserted into the said slot openings 206 of the two central zones 204 of the structure 200 (fig. 5). Each heating box is formed by a support structure 403 which, with end pincers 409, sustains a plurality of tubular heating lamps 404 connected together electrically, partly in series and partly in parallel. In the version illustrated in the figures, the tubular heating lamps 404 are realized with high-temperature incandescent lamps, provided with a tubular quartz casing such as to emit radiation especially in the infrared frequencies to rapidly heat the environment in which they are placed and permit effective cooking of the foodstuff product P. The efficiency of these lamps is excellent as they are able to transform a large part of the electrical energy into heat and, in particular, they are able to transmit the heat to the food product to heat or to cook in a very fast and efficient manner and with very low thermal inertia. It can be seen from figure 2 that the top heating box 401 comprises four tubular lamps 404, while each of the BOTTOM boxes 402 comprises eight tubular lamps 404. For both types of boxes, top and bottom, the support structure 403 is made in such a way as also to include a reflecting screen 405 capable of orienting the radiation towards the food product P to cook or to heat. In greater detail, according to the version illustrated in figure 2, the support structure 403 with the said screen 405 forms a series of identical trapezoid sections on the whole of the transverse part of the boxes 401 and 402 and each trapezoid section makes it possible to obtain an optimal reflexion of the radiation emitted by the tubular lamps 404 towards the food product P to heat and/or cook, and also make it possible to realize sufficient rigidity of the same support structure 403, 405 which is self-supporting for this reason. The boxes 401 and 402 can be extracted easily from the slots 206 to permit maintenance and replacement as required of the tubular lamps 404 and periodic cleaning of the reflecting screens. Envisaged between the bottom boxes 402 and at a proper distance from them is at least one heat probe 408 which measures the oven temperature and sends an associated signal to the electrical control and regulating components (see below). It can be noted from figure 3 that the ends of the lamps 404 are provided with bases made of a heat insulating material 306, which cooperate with the said support pincers 409 and inside which the electrical wiring is located, these bases being protected thermally and mechanically inside the front by internal shields made of refractory material 407 and outside the front by special external shields 406, also made of refractory material, which are also for locking the boxes with the lamps into position correctly. The natural or forced circulation of cooling air can also be envisaged in the channels formed by the said shields. The intermediate cooking zone 201 of the oven is insulated thermally, laterally and at the top, by suitable insulating panels 501-503 (figures 4 and 6), made of any appropriate material, lapped externally by a continuous flow of air which circulates in the interspace formed between these panels and the external ones 101-107 which cover the outside of the oven and finish it aesthetically in such a way that, in addition, during the heating phase, the entire external surface of the area itself is maintained at a low temperature so as to be able to be touched without danger to the operator. Furthermore, thermal shields 504 are envisaged for insulating the electrical connections of the lamps and some of the electrical control and regulating components (not illustrated) of the lamps themselves and of the conveyor belt 300, one only of which is visible in figure 6, and these can also act as supports for the aforesaid electrical components. It can be seen from figure 4 that there are conduits 410 connected to the boxes 401, 402 in correspondence with these shields and carrying the electric wires for connecting the lamps 400 to the associated means of supply and control.

Means of ventilation 600 are envisaged upstream and downstream from the oven in order to obtain a continuous airflow between the insulating panels 501 - 503 and the cover panels 101 - 107. With particular reference to figures 6-8, the means of ventilation 600 essentially comprise two electric fans 601 and 602 which make it possible to create air flows towards the intermediate part of the said interspaces, starting from the two ends of the tunnel oven. The electric fans 601, 602 include fans of the centrifugal type, for example, which draw in air from the external environment through lateral grille openings 603, 604 of the oven fairing (fig. 1) and which are connected at the delivery end to respective manifolds 605, 606 provided with openings to create the aforesaid airflow. In particular, with reference to figures 6 and 7, the manifold 605 connected to the fan 601 is in the zone of the oven entrance mouth 2, above and to the side of it and for this reason has an overturned L shape, while there is a slot 607 on the top arm which sends a horizontal airflow in a direction substantially parallel to and concordant with the feed direction F of the food product P and comprises a series of holes 608 oriented upwards, suitable for sending air jets towards the inside of the top covering panel 101. It can also be seen from figures 6 and 7 that on the bottom side of the top branch itself of the manifold 605 are apertures 609 from which an air curtain pointing downwards exits and forms a barrier substantially closing the oven entrance mouth 2 to limit dispersion through it of the heat produced inside the oven itself. It can be seen from figure 6, on the other hand, that the ascending branch of the manifold 605 is provided with one or more apertures 610 which continuously put an appropriate quantity of air into a side interspace provided with the said shields 504 and the various electric connections of the lamps. Instead, it can be noted from figures 6 and 8 that the manifold 606 positioned close to and above the exit mouth 3 has an elongated slot 611 oriented downwards, to realize a barrier which limits the dispersion of the oven heat from the same mouth 3 and has a series of holes 612 which discharge the air upwards in the direction of the panel 101 and of the holes 613 which discharge the air towards the front panel 107. The air flows put in by the two aforesaid fans into the external interspaces of the oven are for keeping the oven's external fairing panels substantially cold and maintaining the housing zones of the electrical connections of the lamps and other electric components at a low temperature, while the airflow sent into the cooking tunnel is for distributing and better eliminating the moisture developed by the product during transit in the first part of the oven. Slots 800 are envisaged all around the oven in the fairing panels 101-107 of the oven itself to discharge the hot air and ensure the necessary cooling air circulation in the interspaces fed by the fans 601 and 602. It can be seen from figure 4 that small discharge holes can also be envisaged on the ends of the manifolds 605, 606 opposite those connected to the respective fans, also for putting in a correct quantity of air into the oven left-hand interspace, even if this is sufficiently cooled by natural air circulation which it acquires as it is open at the bottom and freely connected to the top interspace. The oven 1 is completed by an electrical panel 700 as illustrated schematically in figures 1 and 6, located in correspondence with the entrance mouth 2 and comprising a display 701 for displaying the main oven operation information, a main switch 702, a regulator 703 and which is connected to a mushroom emergency switch 704 and a start button 705 envisaged on the front of the conveyor 300 support fairing, in correspondence with the oven entrance mouth 2. Figure 1 illustrates the oven in use, with a first food product P previously defrosted using a known procedure and positioned on the conveyor belt 300, directly or inside a corresponding aluminium tray. The start of the oven work cycle is enabled by acting on the start button 705. The conveyor belt 300 only begins to advance when the oven reaches an initial threshold temperature measured by means of the probe 408 in figure 2, a temperature of about 185°C for example. In an initial oven 1 heating stage, all the heating lamps 404 are on and the conveyor belt 300 advances, driven by the gearmotor 303, at a first feed speed, corresponding to the minimum speed set for the conveyor belt, which makes it possible to obtaining complete cooking of the food product even with the said first threshold temperature. When the oven reaches a second preset threshold temperature, a temperature of about 210°C for example, process means are envisaged to ensure that the conveyor belt 300 increases its feed speed to a preset value, while means to ensure that some of the lamps 404 of the bottom boxes 402 are turned off are also envisaged, for example four lamps of these bottom boxes, preferably the last two lamps closest to the exit mouth 3 of the first and of the second bottom boxes. Despite the fact that some lamps are turned off, the oven temperature can continue to rise by inertia as far as a third threshold temperature, which may, for example, have been preset at a value of about 215°C, and when this last value is reached, the said process means are such as to turn off the other lamps in the bottom boxes 402, another four lamps in these boxes for example, preferably the last two lamps in the first and in the second bottom boxes adjacent to the lamps turned off previously. In short, when the third threshold temperature is reached, only the four lamps closest to the entrance mouth 2 remain on in each bottom box 402. In the meantime, the conveyor belt 300 increases the feed speed because, as the oven temperature has increased, less time is necessary for cooking the food product P conveyed by this conveyor. When the oven is in full operation, its production capacity is around 180 pieces/h, for example, with a limited current consumption, of around 3.5 kW/h for example. When the food product P, which is relatively cold, passes into the entrance mouth 2 zone, the air which is made to circulate by the first fan 601 becomes colder and influences the probe 408 which detects a temperature drop and therefore takes action to switch some or all the lamps in the bottom boxes 402 on again. In practice, when the oven is fully operational, the food products P placed in single file are almost always cooked with all the lamps 404 on. If, after a preset time interval, for example of around 15 minutes, the start button 705 is not activated, the processor automatically takes the oven to a standby position, with the activation of only one pair of lamps 404 in each box and with the conveyor 300 which stays on only if the temperature measured by the probe 408 is equal to or greater than that of the first said threshold value. Thanks to the use of infrared lamps, the oven according to this invention reaches the food product cooking temperature very quickly. The particular arrangement of the lamps located above and below the food products makes it possible to obtain differentiated and optimal cooking of the top and of the bottom of the food products P. In particular, when the food product to cook is a pizza, the top lamps effect more "delicate" cooking of the top of the pizza itself, which includes products such as tomato or mozzarella which require less heating. The bottom lamps, which are fewer in number, make it possible on the other hand to obtain more intense cooking of the bottom part of the pizza and a part of the heat emitted by them also inevitably works on the bottom of the product, thanks to the insulation of the tunnel oven. As an effect of the automatic switching on and off of some lamps it is possible to obtain good regulation of the oven temperature with a very simple and rapid control. The possibility of varying the conveyor belt feed speed, or even of stopping it, also makes it possible to improve the regulation and always obtain optimal cooking of food products. Thanks to the compact and accurate construction, and to the excellent insulation, it is possible to obtain high energy efficiency, high productivity and reduced electric power consumption. As partly already said, all the metal parts of the oven, with the exclusion of the frame 20, will preferably be made of stainless steel of a refractory type (AISI 310), so that the oven according to this invention is also very robust and capable of remaining unchanged over the years, as it will be corrosion-free. The constructive form of the oven according to this invention permits easy access and fast disassembly of all the components, so that maintenance will also be very simple too.

## Claims

1. Tunnel oven (1) for food products (P) comprising a cooking zone (201) provided with an entrance mouth (2) and an exit mouth (3), a conveyor belt (300) for transporting food products (P) entering and exiting the said cooking zone (201) in a predetermined direction (F), heating means (400) placed above and below the food products (P) to cook, **characterized in that** the said heating means (400) comprise incandescent high-temperature lamps (404), provided with quartz casings, typically tubular lamps which emit radiations especially in the infrared frequency, to rapidly heat and permit the rapid cooking of the food product (P) and which have reduced thermal inertia.

2. Oven according to Claim 1), in which said cooking zone (201) is found in a box structure (200) comprising lateral slot openings (206) suitable for seating the support boxes (401, 402) of the said lamps (404) in a removable manner.

3. Oven according to any of the previous claims, in which the said lamps (404) are arranged in top (401) and bottom (402) heating boxes, positioned in other words above and below the top branch of the said conveyor (300) for conveying the food product (P) to cook.

4. Oven according to one or more of the previous claims, in which the said lamps (404) are arranged in a first and in a second bottom heating box (402) and in a single top box (401) which is preferably opposite the said second bottom box.

5. Oven according to one or more of the previous claims, in which heating boxes (401, 402) comprise a support structure (403) fixed to which, along with the pincers (409) supporting the terminal support bases (306) of the lamps, is a reflecting screen (405) capable of orienting the radiations towards the food product (P) and which forms a series of identical trapezoid sections across the whole transverse part of the boxes (401, 402).

6. Oven according to any of the previous claims, in which the said lamps (404) are connected together electrically, partly in series and partly in parallel and their connection to the electricity supply wires is carried out on one side only of the oven frame.

7. Oven according to any one of the previous claims, in which the bases (306) of the said lamps (404) are thermally and mechanically protected, from the inside, by internal shields (407) in comb form and from the outside by special external shields (406), also useful for fixing the boxes with the lamps.

8. Oven according to any of the previous claims, comprising electrical control and regulating components for the said lamps (404) and the said conveyor belt (300).

9. Oven according to Claim 8), comprising at least one heat probe (408) which measures the oven temperature and sends the associated signal to the electrical control and regulating components.

10. Oven according to Claim 9), in which the said electrical control and regulating components switch some lamps (404) on or off on the basis of the temperature inside the oven itself.

11. Oven according to Claim 9), in which the said electrical control and regulating components start and adjust the speed of the said conveyor belt (300) on the basis of the temperature inside the oven itself.

12. Oven according to any of the previous claims, in which the said box structure (200) comprises terminal arms (203), joined together by crosspieces (202) and suitable for supporting the conveyor belt (300) of the closed loop type.

13. Oven according to Claim 12), in which the said conveyor belt (300) comprises a bendable reticular link structure (304) suitable for permitting the passage of infrared radiations, in such a way as to permit the heating and cooking of the bottom of the food product (P) too, this conveyor belt being supported at the ends by two comb and toothed rollers (301, 302), supported in turn in a rotatable manner by the said arms (203) and one of these rollers being driven by a gearmotor (303).

14. Oven according to any of the previous claims in which, envisaged on the bottom of the oven in the zone of the entrance mouth (2) and of the exit mouth (3) below the conveyor belt (300) are chutes (307, 308) suitable for conveying the cooking residues of the food products (P) towards a collection box (309) which can be removed periodically for cleaning.

15. Oven according to any of the previous claims, in which the said box structure (200) is supported by a support frame (20) by means of heat insulation inserts (21), made of PTFE or other suitable material for example.

16. Oven according to any of the previous claims, comprising heat insulation panels (501-503), to thermally insulate the said cooking zone (201) of the box structure and which are appropriately distanced from external finishing panels (101-107) fixed on the said frame (20), in such a way that there are interspaces between the said internal and external panels in which cooling air is circulated and which is discharged through slots (800) distributed appropriately at the top of the external panels (101-107).

17. Oven according to any of the previous claims, comprising ventilation means (601, 602) and manifolds (605, 606) to realize airflows in the said interspaces, on the entrance (2) and exit (3) doors of the oven and inside the oven itself, in the product (P) feed direction (F).
